(19) Europäisches Patentamt

European Patent Office

Office européen des brevets

(11) EP 2 362 352 A2

(12) **EUROPEAN PATENT APPLICATION**

(43) Date of publication:
31.08.2011 Bulletin 2011/35

(51) Int Cl.:
*G06T 7/20* (2006.01)

(21) Application number: 11000506.3

(22) Date of filing: 21.01.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.01.2010 JP 2010014238

(71) Applicant: Sanyo Electric Co., Ltd.
Osaka 570-8677 (JP)

(72) Inventors:
• Hongo, Hitoshi
Moriguchi-shi
Osaka (JP)
• Ishii, Yohei
Moriguchi-shi
Osaka (JP)
• Asari, Keisuke
Moriguchi-shi
Osaka (JP)

(74) Representative: Glawe, Delfs, Moll
Patent- und Rechtsanwälte
Postfach 26 01 62
80058 München (DE)

(54) **Congestion degree measuring apparatus**

(57) A congestion degree measuring apparatus includes a reproducer. A reproducer reproduces a reference image representing a state in which a plane is overlooked. A taker repeatedly takes a scene image outputted from a camera having an imaging surface that captures the plane. An allocator allocates one or at least two second areas respectively corresponding to one or at least two first areas designated on the reference image reproduced by the reproducer to the scene image taken by the taker. A measurer executes a process of measuring a congestion degree of one or at least two dynamic objects existing on the plane at each second area allocated by the allocator, based on the scene image taken by the taker.

FIG.1

EP 2 362 352 A2

**Description**

CROSS REFERENCE OF RELATED APPLICATION

The disclosure of Japanese Patent Applicalion No. 2010-14238, which was filed on January 26, 2010, is incorporated herein by reference.

BACKGROUND OF THE INVENTION

Field of the Invention

The present invention relates to a congestion degree measuring apparatus. More particularly, the present invention relates to a congestion degree measuring apparatus which measures a congestion degree of one or at least two dynamic objects existing on a plane, based on a scene image outputted from a camera having an imaging surface that captures the plane.

Description of the Related Art

According to one example of this type of apparatus, a camera captures a plane where a human walks, from a diagonal direction. An image outputted from the camera is divided into a plurality of motion processing regions. At this time, a size of a motion processing region allocated to a close scene is made larger than a size of a motion processing region allocated to a distant scene. A motion of the image is detected in each motion processing region and is compared with a threshold value set to each motion processing region. A congestion degree of a human who walks is estimated based on a comparison result thus obtained.

However, in the above-described apparatus, since it is necessary to make the size of the motion processing region different in a perspective direction of the scene, a work burden for an initial setting may be increased.

SUMMARY OF THE INVENTION

A congestion degree measuring apparatus according to the present invention, comprises: a reproducer which reproduces a reference image representing a state in which a plane is overlooked; a taker which repeatedly takes a scene image outputted from a camera having an imaging surface that captures the plane; an allocator which allocates one or at least two second areas respectively corresponding to one or at least two first areas designated on the reference image reproduced by the reproducer to the scene image taken by the taker; and a measurer which executes a process of measuring a congestion degree of one or at least two dynamic objects existing on the plane at each second area allocated by the allocator, based on the scene image taken by the taker.

The above described features and advantages of the present invention will become more apparent from the following detailed description of the embodiment when taken in conjunction with the accompanying drawings.

BRIEF DESCRIPTION OF THE DRAWINGS

Figure 1 is a block diagram showing a basic configuration of one embodiment of the present invention;
Figure 2 is a block diagram showing a configuration of one embodiment of the present invention;
Figure 3 is an illustrative view showing one example of an installation state of a camera applied to the embodiment in Figure 2;
Figure 4 is an illustrative view showing one example of a camera image displayed on a monitor of the embodiment in Figure 2;
Figure 5 is an illustrative view showing one example of a map image displayed on the monitor of the embodiment in Figure 2;
Figure 6 is an illustrative view showing one example of a configuration of a register applied to the embodiment in Figure 2;
Figure 7 (A) is an illustrative view showing one example of an allocation state of an air conditioning area on the map image;
Figure 7 (B) is an illustrative view showing one example of the allocation state of the air conditioning area on the camera image;
Figure 8 (A) is an illustrative view showing another example of the allocation state of the air conditioning area on the map image;
Figure 8 (B) is an illustrative view showing another example of the allocation state of the air conditioning area on the camera image;
Figure 9 (A) is an illustrative view showing still another example of the allocation state of the air conditioning area on the map image;
Figure 9 (B) is an illustrative view showing still another example of the allocation state of the air conditioning area on the camera image;
Figure 10 is an illustrative view showing one portion of a congestion degree measuring behavior;
Figure 11 is a flowchart showing one portion of behavior of a CPU applied to the embodiment in Figure 2;
Figure 12 is a flowchart showing another portion of behavior of the CPU applied to the embodiment in Figure 2;
Figure 13 is a flowchart showing still another portion of behavior of the CPU applied to the embodiment in Figure 2;
Figure 14 is a flowchart showing yet another portion of behavior of the CPU applied to the embodiment in Figure 2;
Figure 15 is a flowchart showing another portion of behavior of the CPU applied to the embodiment in Figure 2;
Figure 16(A) is an illustrative view showing one example of the allocation state of the air conditioning area on the map image;
Figure 16(B) is an illustrative view showing one example of the allocation state of the air conditioning area on the camera image;

DETAILED DESCRIPTION OF THE PREFERRED EMBODIMENTS

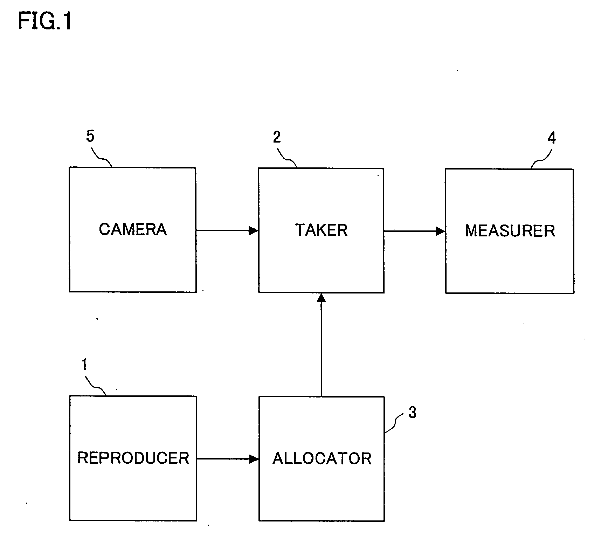

With reference to Figure 1, a congestion degree measuring apparatus of one embodiment of the present invention is basically configured as follows: A reproducer 1 reproduces a reference image representing a state in which a plane is overlooked. A taker 2 repeatedly takes a scene image outputted from a camera 5 having an imaging surface that captures the plane. An allocator 3 allocates one or at least two second areas respectively corresponding to one or at least two first areas designated on the reference image reproduced by the reproducer 1 to the scene image taken by the taker 2. A measurer 4 executes a process of measuring a congestion degree of one or at least two dynamic objects existing on the plane at each second area allocated by the allocator 3, based on the scene image taken by the taker 2.

When the first area is designated on the reference image representing the state in which the plane is outlined or overlooked, the second area used for a congestion degree measurement referring to the scene image is allocated to the scene image corresponding to the designated first area. Thereby, it becomes possible to inhibit a work burden for an initial setting.

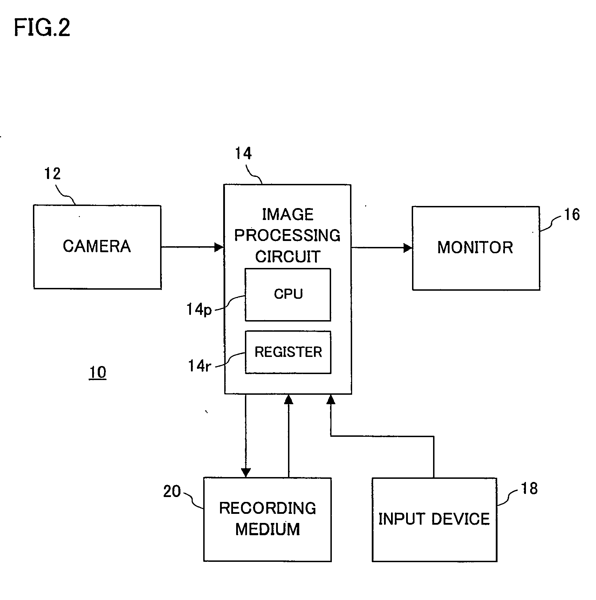

With reference to Figure 2, a congestion degree measuring apparatus 10 according to this embodiment includes a camera 12 that repeatedly outputs image data representing a scene captured on the imaging surface. The image data outputted from the camera 12 is taken by an image processing circuit 14, and subjected to a camera-image display process by a CPU 14p. As a result, an image representing the scene, i.e., a camera image, is displayed on a monitor 16.

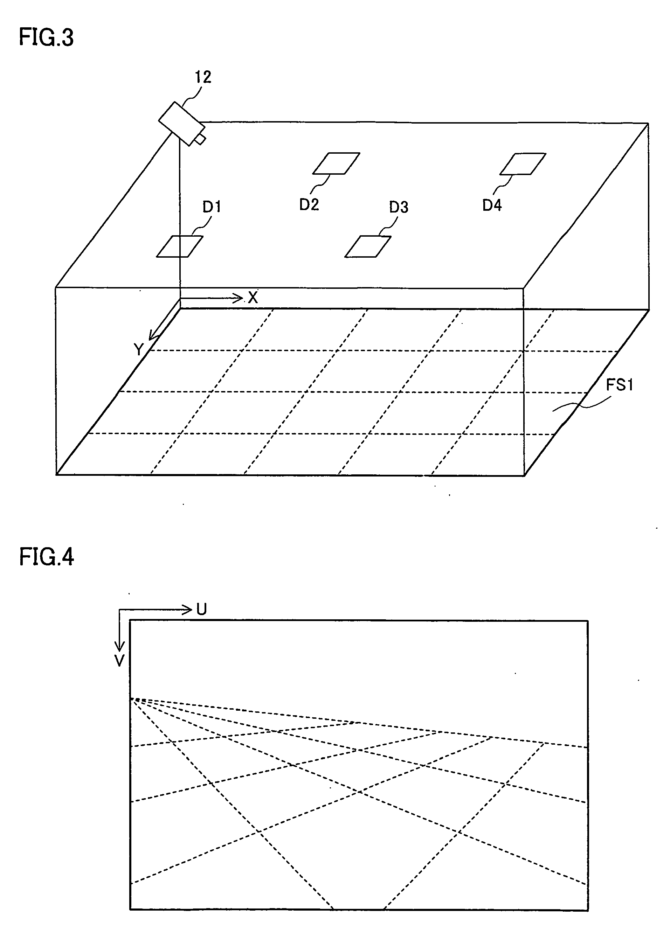

With reference to Figure 3, the camera 12 is installed at an upper portion on a wall surface of a room having a plane FS1, and captures the plane FS 1 from a diagonally upper position. Therefore, the camera image is displayed on a monitor screen as shown in Figure 4. As shown in Figure 3 and Figure 4, the plane FS 1 is defined by an X axis and a Y axis orthogonal to each other, and the camera image is reproduced along a U axis and a V axis orthogonal to each other.

On a ceiling of the room, air conditioning devices D1 to D4 are installed at a predetermined distance. Each of the air conditioning devices D1 to D4 outputs air at a designated temperature in a designated air amount A room temperature is adjusted by the air thus outputted.

When a measurement area setting mode is selected by a manipulation of an input device 18, following processes are executed by a CPU 14p.

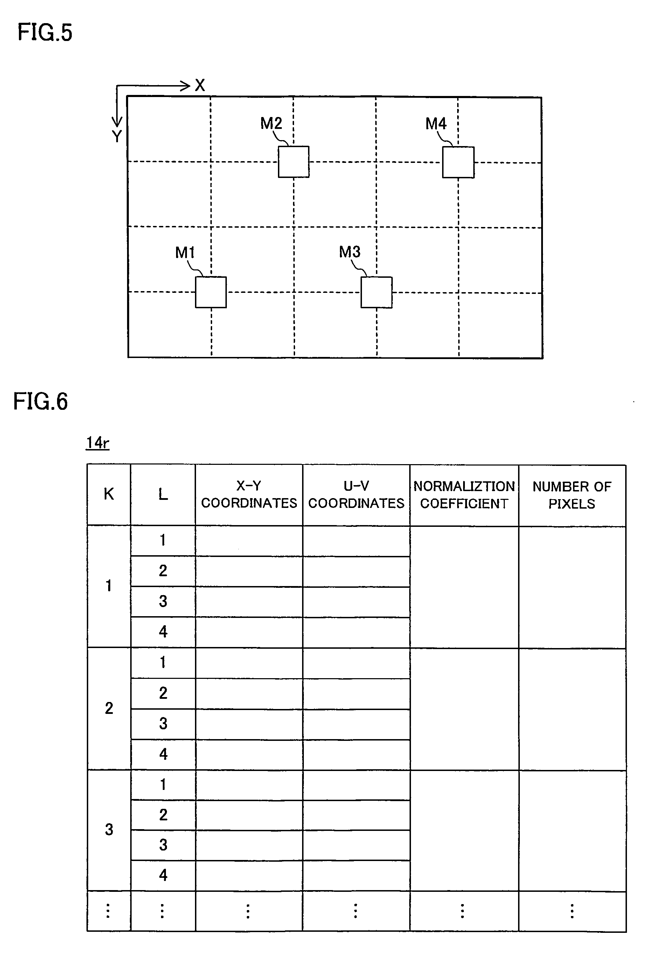

Firstly, a map image shown in Figure 5 is displayed on the monitor 16. The map image is equivalent to an image schematically representing a state in which the plane FS 1 is outlined or overlooked. Moreover, in the map image, marks M1 to M4 respectively representing the air conditioning devices D1 to D4 are displayed corresponding to the positions of the air conditioning devices D1 to D4. Upon completion of displaying the map image, the number of already-set measurement areas is set to the variable K. It is noted that if none of the measurement areas is set, a value of the variable K is set to "0".

When a rectangular area is designated on the map image by a drag manipulation of a mouse pointer arranged in the input device 18, the variable K is incremented, and a line indicating the designated rectangular area is drawn on the map image.

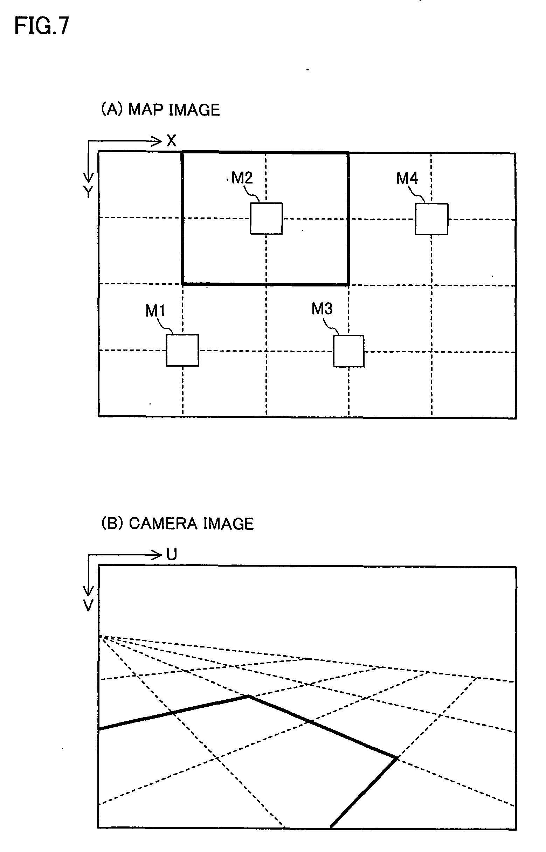

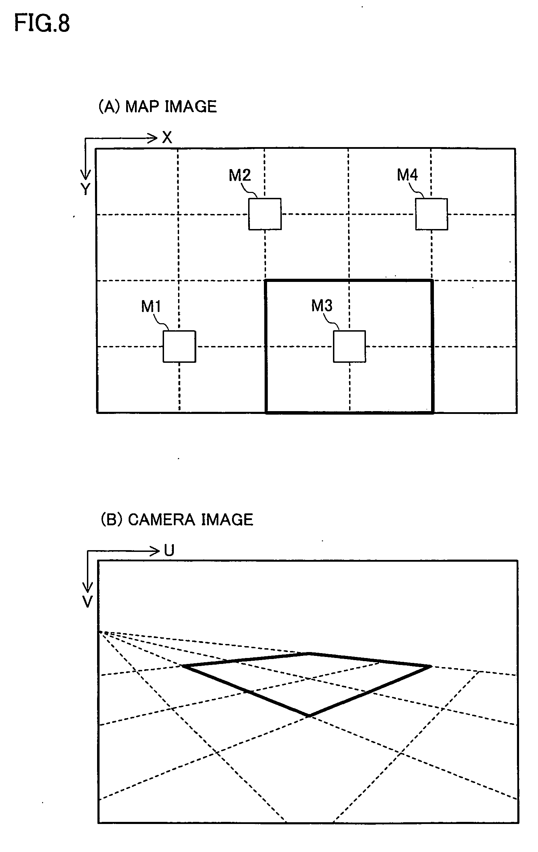

The line indicating the rectangular area is drawn as shown in Figure 7 (A) when the drag manipulation is performed to surround the mark M2, and drawn as shown in Figure 8 (A) when the drag manipulation is performed to surround the mark M3.

Four X-Y coordinates $(X\_1, Y\_1)$, $(X\_2, Y\_2)$, $(X\_3, Y\_3)$, and $(X\_4, Y\_4)$ respectively corresponding to four corners of the designated rectangular area are set to a register 14r shown in Figure 6 corresponding to the value of the variable K. The X-Y coordinates $(X\_1, Y\_1)$ are described in a first column that corresponds to the variable K, and the X-Y coordinates $(X\_2, Y\_2)$ are described in a second column that corresponds to the variable K. Likewise, the X-Y coordinates $(X\_3, Y\_3)$ are described in a third column that corresponds to the variable K, and the X-Y coordinates $(X\_4, Y\_4)$ are described in a fourth column that corresponds to the variable K.

Moreover, in the register 14r, a normalized coefficient $\alpha\_K$ indicating a numerical value corresponding to dimensions of the rectangular area designated by the drag manipulation is described The normalized coefficient $\alpha\_K$ is obtained by dividing the dimensions of the designated rectangular area by unit area, and described in the register 14r corresponding to the variable K.

Upon completion of the process of setting to the register, a variable L is set to each of "1" to "4". X-Y coordinates $(X\_L, Y\_L)$ described in an L-th column that corresponds to the variable K are transformed into U-V coordinates $(U\_L, V\_L)$ according to Equation 1.

[Equation 1]

$$\begin{bmatrix} U \\ V \\ 1 \end{bmatrix} = \begin{bmatrix} P11 & P12 & P13 \\ P21 & P22 & P23 \\ P31 & P32 & P33 \end{bmatrix} \begin{bmatrix} X \\ Y \\ 1 \end{bmatrix}$$

Calibration parameters P11 to P33 shown in Equation 1 are equivalent to a matrix for performing a planar projective transformation between an X-Y coordinate system defining the plane FS 1 and a U-V coordinate system defining the camera image. Therefore, when the X-Y coordinates $(X\_L, Y\_L)$ on the plane FS1 are applied to Equation 1, the corresponding U-V coordinates $(U\_L, V\_L)$ on the camera image are calculated. The U-V coordinates $(U\_L, V\_L)$ thus transformed are described in the register 14r corresponding to the X-Y coordinates $(X\_L, Y\_L)$, which are a transformation source.

A total of four transformation processes according to Equation 1 are executed, and as a result, the U-V coordinates $(U\_1, V\_1)$, $(U\_2, V\_2)$, $(U\_3, V\_3)$, and $(U\_4, V\_4)$ respectively corresponding to the X-Y coordinates $(X\_1, Y\_1)$, $(X\_2, Y\_2)$, $(X\_3, Y\_3)$, and $(X\_4, Y\_4)$ are calculated. Upon completion of the transformation process, an area surrounded by the U-V coordinates $(U\_1, V\_1)$, $(U\_2, V\_2)$, $(U\_3, V\_3)$, and $(U\_4, V\_4)$ is specified as the measurement area, and a line indicating the specified measurement area is drawn on the camera image. The number of pixels belonging to the measurement area out of a plurality of pixels configuring the camera image is described in the register 14r corresponding to the variable K.

Therefore, the line defining the measurement area is drawn as shown in Figure 7 (B) corresponding to the rectangular area shown in Figure 7 (A), and drawn as shown in Figure 8 (B) corresponding to the rectangular area shown in Figure 8 (A). Moreover, the number of pixels positioned inside of the line shown in Figure 7 (B) is described in the register 14r corresponding to the rectangular area shown in Figure 7 (A), and the number of pixels positioned inside of the line shown in Figure 8 (B) is described in the register 14r corresponding to the rectangular area shown in Figure 8 (A).

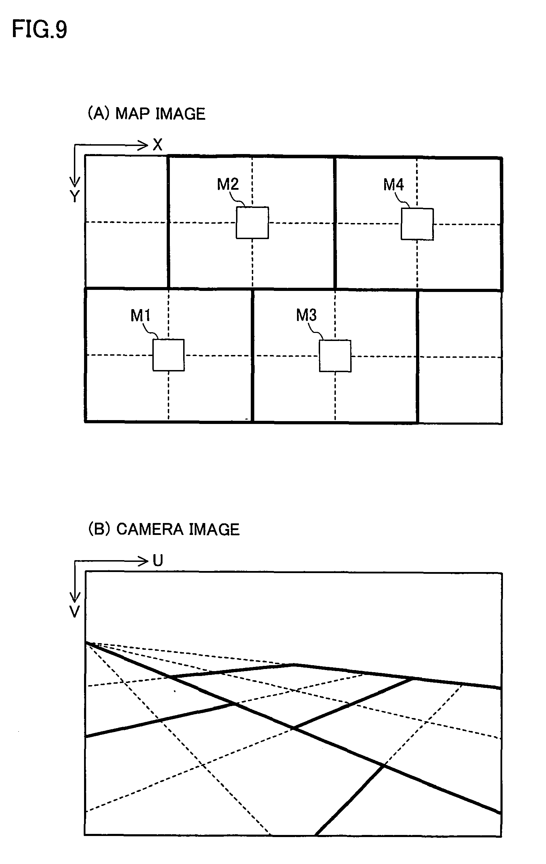

As a result, when a total of four drag manipulations are executed in a manner to surround each of the marks M1 to M4, the line indicating the rectangular area is drawn on the map image as shown in Figure 9 (A), and concurrently, the line indicating the measurement area is drawn on the camera image as shown in Figure 9 (B). Attribute information of the four measurement area thus defined is described in the register 14r.

When a congestion degree measuring mode is selected by the manipulation of the input device 18 after the setting of the measurement area is completed, following processes are executed by the CPU 14p at each arrival of a measurement cycle.

Firstly, an image indicating a motion, i.e., a motion image is detected on the camera image. Subsequently, the variable K is set to "1", and the number of pixels of K-th measurement area (=the number of pixels described in the register 14r corresponding to the variable K) is set to a variable $P\_K\_1$. Moreover, a motion image belonging to the K-th measurement area is categorized from the motion image detected on the camera image, and the number of pixels of the categorized motion image is set to a variable $P\_K\_2$.

A congestion degree $CR\_K$ indicating the level of congestion of the K-th measurement area is calculated based on thus set variables $P\_K\_1$ and $P\_K\_2$ and the normalized coefficient $\alpha\_K$ described in the register 14r. Specifically, the congestion degree CR_K is obtained by dividing the variable P_K_2 by the variable P_K_1 and multiplying a divided value obtained thereby by the normalized coefficient α_K. When the congestion degree CR_K is calculated, it is determined whether or not the variable K reaches a maximum value Kmax (=a total number of the measurement areas). When a determined result is NO, the variable K is incremented, and the above-described process is executed again. When the determined result is YES, each output of the air conditioning devices D1 to D4 is controlled based on the calculated congestion degrees CR_1 to CR_Kmax. Specifically, the output of an air conditioning device close to a measurement area in which the congestion degree is great is strengthened while the output of an air conditioning device close to a measurement area in which the congestion degree is small is weakened.

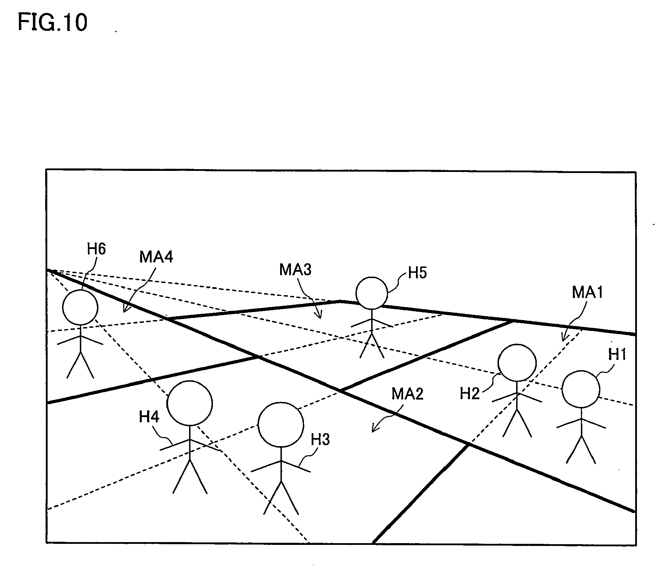

With reference to Figure 10, in a case where a measurement area MA1 is set below the air conditioning device M1, a measurement area MA2 is set below the air conditioning device M2, a measurement area MA3 is set below the air conditioning device M3, and a measurement area MA4 is set below the air conditioning device M4, it is assumed that humans H1 and H2 move on the measurement area MA1, humans H3 and H4 move on the measurement area MA2, a human H5 moves on the measurement area MA3, and a human H6 moves on the measurement area MA4.

Then, a congestion degree of the measurement area MA1 is calculated based on the number of pixels of an image belonging to the measurement area MA1, the number of pixels of an image representing the humans H1 and H2, and the normalized coefficient α_1, and a congestion degree of the measurement area MA2 is calculated based on the number of pixels of an image belonging to the measurement area MA2, the number of pixels of an image representing the humans H3 and H4, and the normalized coeffcient α_2. Moreover, a congestion degree of the measurement area MA3 is calculated based on the number of pixels of an image belonging to the measurement area MA3, the number of pixels of a partial image belonging to the measurement area MA3 out of an image representing the human H5, and the normalized coefficient α_3, and a congestion degree of the measurement area MA4 is calculated based on the number of pixels of an image belonging to the measurement area MA4, the number of pixels of an image representing the human H6, and the normalized coefficient α_4. As a result, the outputs of the air conditioning devices D 1 and D2 are more strengthened than the outputs of the air conditioning devices D3 and D4.

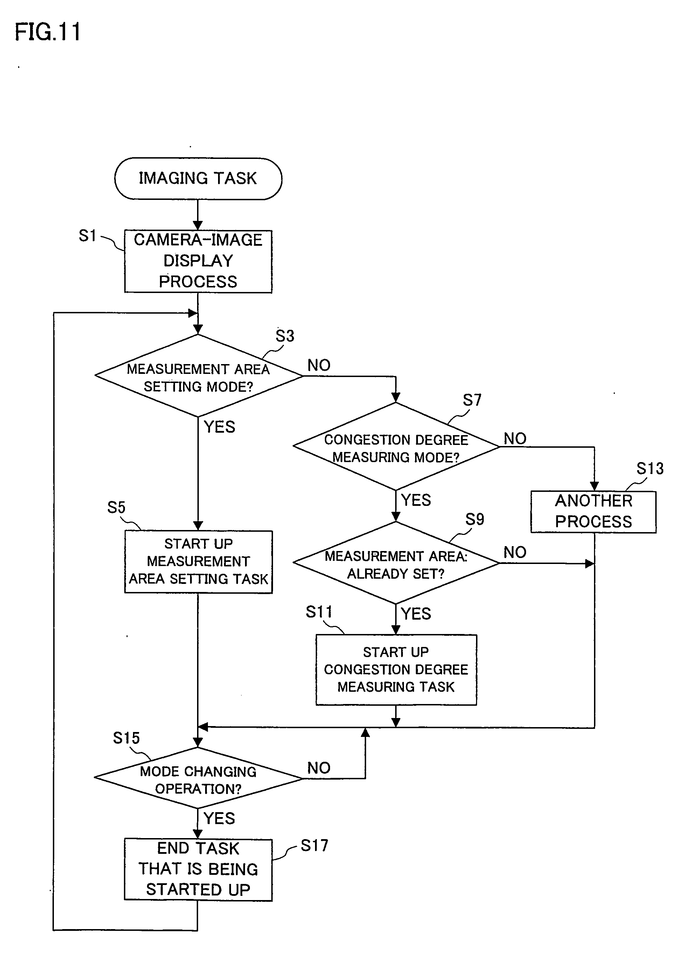

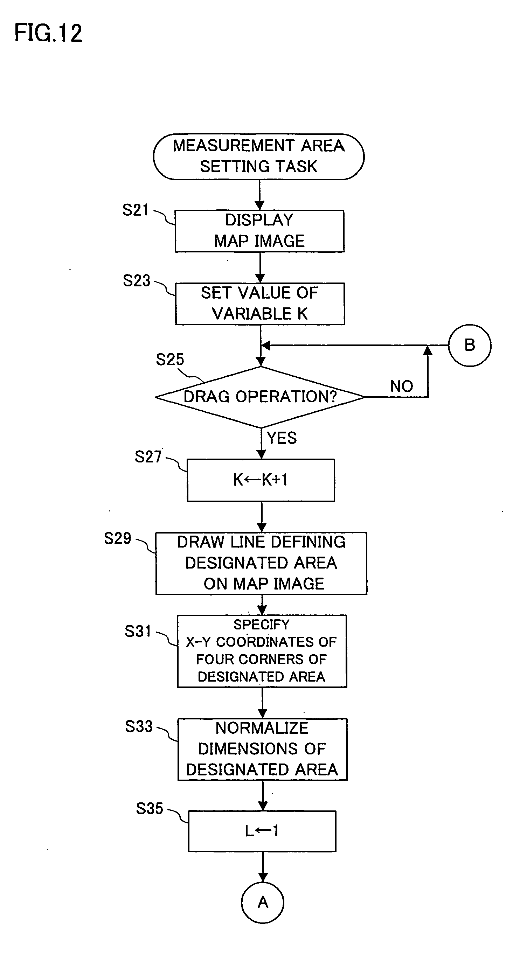

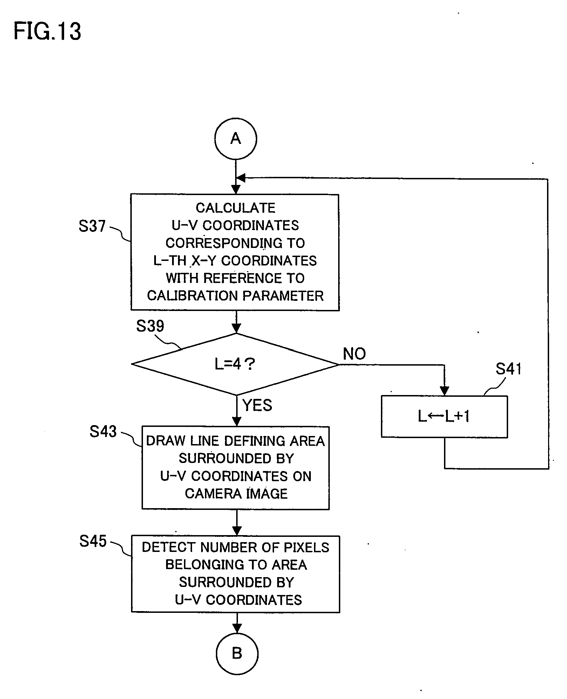

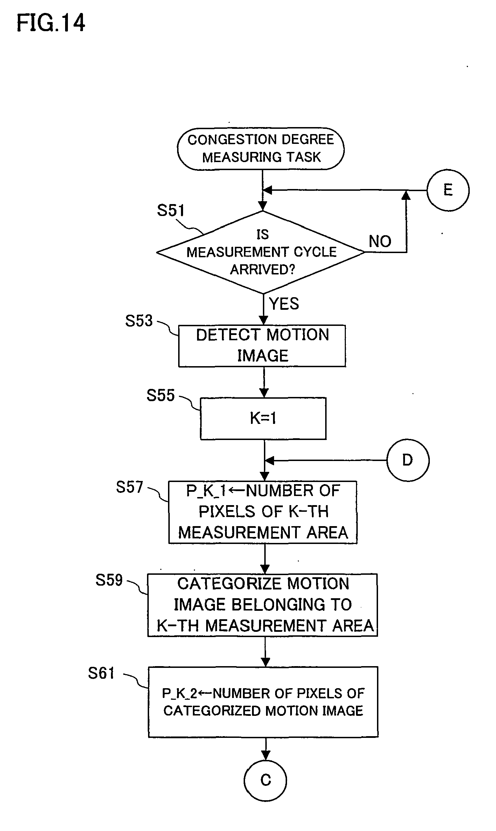

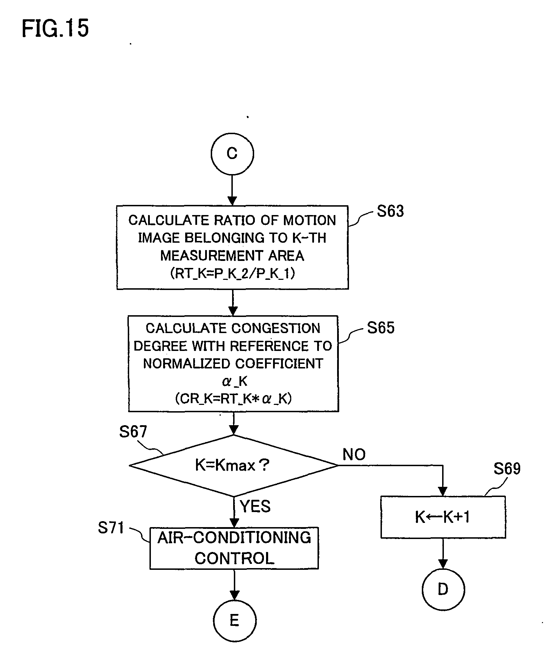

The CPU 14p executes a plurality of tasks including an imaging task shown in Figure 11, a measurement area setting task shown in Figure 12 to Figure 13, and a congestion degree measuring task shown in Figure 14 to Figure 15. It is noted that control programs corresponding to these tasks are stored in a recording medium 20.

With reference to Figure 11, in a step S 1, the camera-image display process is executed. As a result, the camera image is displayed on the monitor 16. In a step S3, it is determined whether or not an operation mode at a current time point is the measurement area setting mode, and in a step S7, it is determined whether or not an operation mode at a current time point is the congestion degree measuring mode.

When YES is determined in the step S3, the measurement area setting task is started up in a step S5, and thereafter, the process advances to a step S15. When YES is determined in the step S7, it is determined in a step S9 whether or not the measurement area is already set When a determined result is YES, the congestion degree measuring task is started up in a step S11, and then the process advances to the step S 15 while when the determined result is NO, the process directly advances to the step S15. When NO is determined in both the steps S3 and S7, another process is executed in a step S13, and thereafter, the process advances to.the step S15.

In the step S 15, it is repeatedly determined whether or not a mode changing manipulation is performed. When a determined result is updated from NO to YES, the task that is being started up is ended in a step S 17, and thereafter, the process returns to the step S3.

With reference to Figure 12, the map image is displayed on the monitor 16 in a step S21, and the value of the variable K is set in a step S23. If none of the measurement areas is set, then the value of the variable K is set to "0". On the other hand, if one or at least two measurement areas are already set, then the value of the variable K is set to the number of the set measurement areas.

In a step S25, it is determined whether or not the drag manipulation for designating the area is performed, and when a determined result is updated from NO to YES, the variable K is incremented in a step S27. In a step 529, the line defining the rectangular area designated by the drag manipulation is drawn on the map image.

In a step S31, the four X-Y coordinates (X_1, Y_1), (X_2, Y_2), (X_3, Y_3), and (X_4, Y_4) respectively corresponding to the four corners of the rectangular area thus designated are specified. The specified X-Y coordinates (X_1, Y_1), (X_2, Y_2), (X_3, Y_3), and (X_4, Y_4) are set in the register 14r corresponding to the value of the variable K.

In a step S33, the normalized coefficient α_K is calculated by dividing the dimensions of the rectangular area designated by the drag manipulation by the unit area. The calculated normalized coefficient α_K is also set to the register 14r corresponding to the value of the variable K.

Upon completion of the process of setting to the register 14r, the variable L is set to "1" in a step S35. In a subsequent step S37, the X-Y coordinates (X_L, Y_L) described in the L-th column that corresponds to the variable K are read out from the register 14r, and the read-out X-Y coordinates (X_L, Y_L) are transformed into the U-V coordinates (U_L, V_L) according to the above-described Equation 1. The transformed U-V coordinates (U_L, V_L) are described in the register 14r corresponding to the X-Y coordinates (X_L, Y_L), which are a transformation source.

In a step S39, it is determined whether or not the variable L reaches "4". When a determined result is NO, the variable L is incremented in a step S41, and then, the process returns to the step S37 while when the determined result is YES, the process advances to a step S43. Therefore, processes after the step S43 are executed after the X-Y coordinates (X_1, Y_1), (X_2, Y_2), (X_3, Y_3), and (X_4, Y_4) are transformed into the U-V coordinates (U_1, V_1), (U_2, V_2), (U_3, V_3), and (U_4, V_4).

In the step S43, the area surrounded by the U-V coordinates (U_1, V_1), (U_2, V_2), (U_3, V_3), and (U_4, V_4) that correspond to the variable K is specified as the measurement area so as to draw the line defining the specified measurement area on the camera image. In a step S45, out of the plurality of pixels configuring the camera image, the number of pixels belonging to the measurement area specified in the step S43 is detected. The detected number of pixels is described in the register 14r corresponding to the variable K. Upon completion of the process in the step S45, it is regarded that the setting of the K-th measurement area is completed, and the process returns to the step S25.

With reference to Figure 14, in a step S51, it is determined whether or not the measurement cycle is arrived When the determined result is updated from NO to YES, in a step S53, the image indicating the motion, i.e., the motion image is detected on the camera image. In a step S55, the variable K is set to "1", and in a step S57, with reference to the register 14r, the number of pixels of K-th measurement area (=the number of pixels described in the register 14r corresponding to the variable K) is set to the variable P_K_1. In a step S59, the motion image belonging to the K-th measurement area is categorized from the motion image detected in the step S53, and in a step S61, the number of pixels of the categorized motion image is set to the variable P_K_2.

In a step S63, a ratio of the motion image belonging to the K-th measurement area occupying in the K-th measurement area is calculated based on the variables P_K_1 1 and P_K_2 respectively set in the steps S57 and S61. The ratio (=RT_K) is equivalent to a value of dividing the variable P_K_2 by the variable P_K_1. In a step S65, the congestion degree of the K-th measurement area is calculated as "CR_K" by multiplying the calculated ratio RT_K by the normalized coefficient $\alpha$_K.

When the congestion degree CR_K is calculated, in a step S67, it is determined whether or not the variable K reaches the maximum value Kmax (=the total number of the measurement areas). When a determined result is NO, the variable K is incremented in a step S69, and thereafter, the process returns to the step S57. When the determined result is YES, the process advances to a step S71 so as to control the outputs of the air conditioning devices D1 to D4 based on the congestion degrees CR_1 to CR_Kmax calculated in the step S65. Upon completion of the air-conditioning control, the process returns to the step S51.

As can be seen from the above-described explanation, the CPU 14p displays on the monitor 16 the map image representing the state in which the plane FS1 is outlined or overlooked (S21), and accepts on the displayed map image the drag manipulation of designating one or at least two rectangular areas from the manipulator (S25). The camera 12 has the imaging surface capturing the plane FS 1, and repeatedly outputs the scene image, i.e., the camera image. The CPU 14p takes the camera image outputted from the camera 12 (S1), and allocates one or at least two measurement areas respectively corresponding to one or at least two rectangular areas designated by the drag manipulation to the camera image (S27 to S31, S35 to S43). Moreover, the CPU 14p executes the process of measuring the congestion degree of one or at least two dynamic objects existing on the plane FS1 at each measurement area allocated to the camera image, based on the camera image (S51 to S69).

The drag manipulation of designating the rectangular area is accepted on the map image representing the state in which the plane FS1 is outlined or overlooked. The measurement area used for the congestion degree measurement referring to the camera image is allocated to the camera image corresponding to the rectangular area designated by the drag manipulation. Thereby, it becomes possible to inhibit the work burden for the initial setting.

It is noted that, in this embodiment, it is assumed that the planar projective transformation is performed between the X-Y coordinate system defining the plane FS1 and the U-V coordinate system defining the camera image. However, in a case where a congestion degree of humans working in an office where a large number of desks and chairs are placed, a measuring accuracy seems to be more improved by noticing a movement on the desk rather than a movement at feet

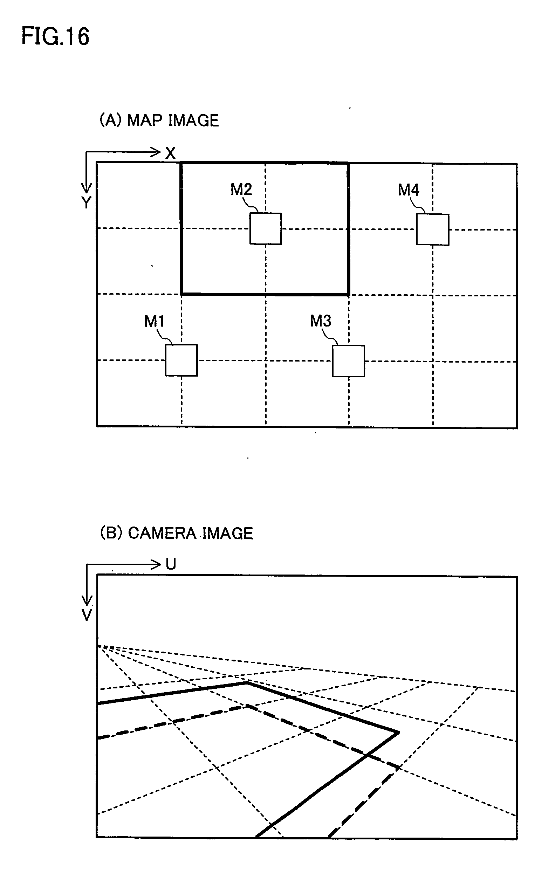

In this case, the calibration parameters P11 to P33 applied to Equation 1 are adjusted to values in which an offset equivalent to a height of the desk (an offset in a length direction of a Z axis orthogonal to the X axis and the Y axis) is taken into consideration. If the planar projective transformation is executed by referring to the calibration parameters P 11 to P33 having the thus adjusted values, then a measurement area corresponding to a rectangular area indicated by a bold line in Figure 16(A) is set as indicated by a bold line in Figure 16(B) (a dotted line indicates a previous setting).

Moreover, in this embodiment, the rectangular area is designated by the drag manipulation of the mouse pointer. However, instead thereof, the rectangular area may be designated by input of a numerical value indicating the U-V coordinates.

Moreover, in this embodiment, the plane FS 1 is captured from the diagonally upper position by the camera 12 installed at the upper portion on the wall surface, however, instead thereof the plane FS 1 may be captured from directly above by an omnidirectional camera set on the ceiling.

Furthermore, in this embodiment, it is assumed that the output of the air conditioning device is adaptively controlled, however, instead of the output of the air conditioning device, or together with the output of the air conditioning device, the output of an illuminating device (i.e., brightness) may be adaptively controlled.

Moreover, in this embodiment, the planar projective transformation referring to Equation 1 is assumed, however, instead thereof, a perspective projective transformation may be performed.

Although the present invention has been described and illustrated in detail, it is clearly understood that the same is by way of illustration and example only and is not to be taken by way of limitation, the spirit and scope of the present invention being limited only by the terms of the appended claims.

**Claims**

1. A congestion degree measuring apparatus, comprising:

   a reproducer which reproduces a reference image representing a state in which a plane is overlooked;
   a taker which repeatedly takes a scene image outputted from a camera having an imaging surface that captures the plane;
   an allocator which allocates one or at least two second areas respectively corresponding to one or at least two first areas designated on the reference image reproduced by said reproducer to the scene image taken by said taker, and
   a measurer which executes a process of measuring a congestion degree of one or at least two dynamic objects existing on the plane at each second area allocated by said allocator, based on the scene image taken by said taker.

2. A congestion degree measuring apparatus according to claim 1, wherein said measurer includes a motion image detector which detects a motion image indicating a motion from the scene image taken by said taker, a size calculator which calculates a size of an image belonging to the second area out of the motion image detected by said motion image detector, and a ratio calculator which calculates a ratio of the size measured by said measurer to the size of the second area.

3. A congestion degree measuring apparatus according to claim 2, further comprising a normalizer which normalizes a size of each of the one or at least two first areas so as to calculate a normalized coefficient, wherein said measurer further includes a multiplier which multiplies the ratio calculated by said ratio calculator by the normalized coefficient calculated by said normalizer.

4. A congestion degree measuring apparatus according to any one of claims 1 to 3, wherein the one or at least two first areas are respectively corresponding to one or at least two devices arranged in a space partitioned by the plane, and said congestion degree measuring apparatus further comprising a controller which controls behaviors of the one or at least two devices based on the congestion degree measured by said measurer.

5. A congestion degree measuring apparatus according to any one of claims 1 to 4, wherein the plane is defined along an X axis and a Y axis orthogonal to each other, the scene image outputted from the camera is defined along a U axis and a V axis orthogonal to each other, and said allocator executes an allocation process with reference to a calibration parameter indicating a corresponding relationship between an X-Y coordinate system and a U-V coordinate system.

6. A congestion degree measuring apparatus according to claim 5, wherein the calibration parameter has an offset in a length direction of a Z axis orthogonal to each of the X axis and the Y axis.

FIG.1

FIG.2

FIG.3

FIG.4

FIG.5

FIG.6

14r

| K | L | X-Y COORDINATES | U-V COORDINATES | NORMALIZTION COEFFICIENT | NUMBER OF PIXELS |
|---|---|---|---|---|---|
| 1 | 1 | | | | |
| | 2 | | | | |
| | 3 | | | | |
| | 4 | | | | |
| 2 | 1 | | | | |
| | 2 | | | | |
| | 3 | | | | |
| | 4 | | | | |
| 3 | 1 | | | | |
| | 2 | | | | |
| | 3 | | | | |
| | 4 | | | | |
| ⋮ | ⋮ | ⋮ | ⋮ | ⋮ | ⋮ |

# FIG.7

(A) MAP IMAGE

(B) CAMERA IMAGE

# FIG.8

(A) MAP IMAGE

(B) CAMERA IMAGE

# FIG.9

(A) MAP IMAGE

(B) CAMERA IMAGE

FIG.10

# FIG.11

```
        ┌────────────────────┐
        │   IMAGING TASK     │
        └────────────────────┘
                  │
                  ▼
      S1 ──  ┌──────────────┐
             │ CAMERA-IMAGE │
             │   DISPLAY    │
             │   PROCESS    │
             └──────────────┘
                  │
                  ▼
              ◇ S3
         MEASUREMENT AREA      NO
         SETTING MODE?   ──────────┐
                  │                │
                 YES               ▼
                  │            ◇ S7
                  │       CONGESTION DEGREE    NO
                  │       MEASURING MODE?  ──────────┐
                  │                │                 │
                  │               YES                ▼
      S5          │                │            ┌──────────┐
   ┌──────────────┐           ◇ S9             │ S13      │
   │  START UP    │      MEASUREMENT AREA:  NO  │ ANOTHER  │
   │ MEASUREMENT  │      ALREADY SET?  ─────────│ PROCESS  │
   │ AREA SETTING │           │                 └──────────┘
   │    TASK      │          YES
   └──────────────┘   S11     │
          │        ┌──────────────────┐
          │        │    START UP      │
          │        │ CONGESTION DEGREE│
          │        │ MEASURING TASK   │
          │        └──────────────────┘
          │                │
          ▼                ▼
      ◇ S15
   MODE CHANGING      NO
   OPERATION?  ─────────┐
          │             │
         YES            │
          ▼             │
   ┌──────────────┐  S17
   │  END TASK    │
   │ THAT IS BEING│
   │ STARTED UP   │
   └──────────────┘
```

FIG.12

```
        ┌─────────────────────────┐
        │   MEASUREMENT AREA      │
        │    SETTING TASK         │
        └─────────────────────────┘
                    │
                    ▼
   S21      ┌─────────────────────┐
            │     DISPLAY         │
            │    MAP IMAGE        │
            └─────────────────────┘
                    │
                    ▼
   S23      ┌─────────────────────┐
            │   SET VALUE OF      │
            │    VARIABLE K       │
            └─────────────────────┘
                    │
                    ▼                              ┌───┐
   S25          ╱─────────╲          NO            │ B │
            ╱─────────────────╲───────────────────▶└───┘
            ╲  DRAG OPERATION? ╱
                ╲─────────╲─╱
                    │ YES
                    ▼
   S27      ┌─────────────────────┐
            │      K←K+1          │
            └─────────────────────┘
                    │
                    ▼
   S29      ┌─────────────────────┐
            │ DRAW LINE DEFINING  │
            │  DESIGNATED AREA    │
            │   ON MAP IMAGE      │
            └─────────────────────┘
                    │
                    ▼
            ┌─────────────────────┐
            │      SPECIFY        │
   S31      │ X-Y COORDINATES OF  │
            │  FOUR CORNERS OF    │
            │  DESIGNATED AREA    │
            └─────────────────────┘
                    │
                    ▼
   S33      ┌─────────────────────┐
            │    NORMALIZE        │
            │  DIMENSIONS OF      │
            │ DESIGNATED AREA     │
            └─────────────────────┘
                    │
                    ▼
   S35      ┌─────────────────────┐
            │       L←1           │
            └─────────────────────┘
                    │
                    ▼
                  ┌───┐
                  │ A │
                  └───┘
```

# FIG.13

```
              ( A )
                │
                ▼
     ┌──────────────────────┐
     │      CALCULATE       │
     │   U-V COORDINATES    │
S37  │   CORRESPONDING TO   │
     │   L-TH X-Y COORDINATES│
     │   WITH REFERENCE TO  │
     │  CALIBRATION PARAMETER│
     └──────────────────────┘
             │
   S39       ▼
         ◇─────────◇        NO        ┌──────────┐
        ◇  L=4 ?    ◇ ──────────────  │  S41     │
         ◇─────────◇                  │ ┌──────┐ │
             │                        │ │ L←L+1│ │
            YES                       └─└──────┘─┘
             ▼
     ┌──────────────────────┐
S43  │ DRAW LINE DEFINING AREA│
     │    SURROUNDED BY     │
     │   U-V COORDINATES ON │
     │     CAMERA IMAGE     │
     └──────────────────────┘
             │
             ▼
     ┌──────────────────────┐
S45  │ DETECT NUMBER OF PIXELS│
     │   BELONGING TO AREA  │
     │    SURROUNDED BY     │
     │   U-V COORDINATES    │
     └──────────────────────┘
             │
             ▼
            ( B )
```

# FIG.14

```
      CONGESTION DEGREE
       MEASURING TASK
              │
              ▼                         ┌──(E)
S51          ◇                          │
         IS                   NO        │
    MEASUREMENT CYCLE ─────────────────┘
       ARRIVED?
              │
             YES
              ▼
S53    DETECT MOTION
          IMAGE
              │
              ▼
S55         K=1
              │
              ▼◄──────────────(D)
S57    P_K_1←NUMBER OF
        PIXELS OF K-TH
     MEASUREMENT AREA
              │
              ▼
S59   CATEGORIZE MOTION
     IMAGE BELONGING TO
    K-TH MEASUREMENT AREA
              │
              ▼
S61    P_K_2←NUMBER OF PIXELS OF
     CATEGORIZED MOTION IMAGE
              │
              ▼
             (C)
```

# FIG.15

C

| |
CALCULATE RATIO OF MOTION IMAGE BELONGING TO K-TH MEASUREMENT AREA (RT_K=P_K_2/P_K_1) — S63

CALCULATE CONGESTION DEGREE WITH REFERENCE TO NORMALIZED COEFFICIENT $\alpha$_K (CR_K=RT_K* $\alpha$_K) — S65

S67 — K=Kmax?

NO

S69 — K←K+1

D

YES

S71 — AIR-CONDITIONING CONTROL

E

# FIG.16

(A) MAP IMAGE

(B) CAMERA IMAGE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010014238 A